# EUROPEAN PATENT APPLICATION

(11) **EP 4 556 141 A1**
(43) Date of publication of application: **21.05.2025**
(21) Application number: 23882653.1
(22) Date of filing: 24.10.2023
(51) Int. Cl.: B22F 1/00, B22D 11/00, B22F 1/052, B22F 1/16, B22F 3/24, B22F 9/08, B22F 10/00, B22F 10/28, B22F 10/34, B22F 10/38, B22F 10/64, B33Y 10/00, B33Y 70/00, C22C 9/00, C22C 9/06

(54) **COPPER ALLOY POWDER FOR METAL ADDITIVE MANUFACTURING (AM) AND METHOD FOR PRODUCING LAMINATE MOLDED ARTICLE**

(30) Priority: 24.10.2022 JP 2022169924
(71) Applicant: Mitsubishi Materials Corporation, Tokyo 100-8117 (JP)
(72) Inventor: HIRANO, Shingo, Tokyo 100-8117 (JP); OKUBO, Kiyoyuki, Tokyo 100-8117 (JP); KUMAGAI, Satoshi, Sakai-shi, Osaka 590-0906 (JP); KATO, Jun, Saitama-shi, Saitama 330-8508 (JP); IKEDA, Hiroaki, Saitama-shi, Saitama 330-8508 (JP); MINE, Kazuhisa, Naka-shi, Ibaraki 311-0102 (JP); NITA, Nobuyasu, Naka-shi, Ibaraki 311-0102 (JP); KON, Naochika, Naka-shi, Ibaraki 311-0102 (JP)
(74) Representative: Gille Hrabal Partnerschaftsgesellschaft mbB Patentanwälte
(86) International application number: PCT/JP2023/038395
(87) International publication number: WO 2024/090448

(57) **Abstract**

This copper alloy powder for a metal AM is formed of a copper alloy containing Cr, and a Cr compound layer including a Cr-containing compound is formed on a surface of a copper alloy particle constituting the copper alloy powder.

## Description

### Technical Field

The present invention relates to a copper alloy powder for a metal AM most suitable for a metal additive manufacturing (a metal AM) technique, and a method for manufacturing an additive manufacturing product.

Priority is claimed on Japanese Patent Application No. 2022-169924, filed October 24, 2022, the content of which is incorporated herein by reference.

### Background Art

In recent years, as a method for manufacturing metal components having various three-dimensional shapes, metal AM technologies for forming a product by a metal 3D printer using mainly a powder as a raw material have been put into practical use. As major metal AM technologies using metal powders, a powder bed melting method using an electron beam or laser light (powder bed fusion (PBF)), a binder jetting method, and the like are exemplary examples.

Here, copper alloys have many basic characteristics suitable for industrial applications, such as an electrical conductivity, a heat conductivity, a mechanical characteristic, an abrasion resistance, and a heat resistance, and thus is used as a material for various members. Therefore, in recent years, in various fields, such as outer space and electrical-components applications, attempts have been made to form members having various shapes by using a metal AM using a copper alloy powder, and there is increasing needs for copper and copper alloy components manufactured by metal AM.

For example, Patent Document 1 proposes a technology for manufacturing an additive manufacturing product by the metal AM using a copper alloy powder containing any of Cr and Si.

In addition, Patent Document 2 proposes a technology for manufacturing an additive manufacturing product by the metal AM using a copper alloy powder containing Cr and Zr.

### Citation List

### Patent Documents

Patent Document 1:
   Japanese Unexamined Patent Application, First Publication No. 2016-211062
Patent Document 2:
   Japanese Unexamined Patent Application, First Publication No. 2019-070169

### Non-Patent Document

Non-Patent Document 1:
Y. M. Arisoy et. al., "Influence of scan strategy and process parameters on microstructure and its optimization in additively manufactured nickel alloy 625 via laser powder bed fusion", The International Journal of Advanced Manufacturing Technology, Volume 90, p.p. 1393-1417 (2017).

### Summary of Invention

### Technical Problem

A metal structure, which is formed by the metal AM, is used as some kind of structural member according to various applications. Accordingly, when a void exists in an additive manufacturing body or when a microstructure as a metal material is not uniform, there is a problem in terms of thermomechanical or electrical reliability.

Currently, a forming method most often used for the metal AM is laser PBF, and attempts have also been made to forming copper and a copper alloy by the laser PBF.

Meanwhile, in a case of performing an additive manufacturing by a method of irradiating laser light or an electron beam, a thin powder layer is first formed (a powder bed), and laser or an electron beam is locally irradiated to the powder bed to melt and solidify a material. However, compared to other metal materials such as iron, titanium, nickel-based materials and the like, in copper and a copper alloy, there are many problems that a melting behavior of a copper alloy powder becomes unstable during a process of the laser PBF, voids easily occurs in a manufactured additive manufacturing product, quality of a formed body manufactured by the laser PBF is not stable, productivity is poor, and the like, due to a high reflectivity of copper itself to light in visible and infrared regions and the like. Therefore, it has been required to improve productivity and the quality of copper and a copper alloy manufactured by the laser PBF.

Currently, the most widely used form of a raw material for the metal AM is a powder. For example, in the metal AM that uses the laser PBF, a melting behavior of the raw powder can be affected by optical absorption characteristics of electromagnetic waves in particles, which is determined by a coupling-interaction between surface layers of each particle in a raw powder and the electromagnetic waves irradiated, and this melting behavior of the raw powder greatly affects productivity of components and quality of components, including a defect density of components. For example, in a metal AM process that uses a powder bed, a thickness of the powder bed formed in a single additive manufacturing process is, for example, approximately several ten µm (Non-Patent Document 1), the raw powder is melted by irradiating a relatively thin powder bed with converged electromagnetic waves, and furthermore, a desired formed structure can be realized through a large number of repetition of additive manufacturing process and subsequent melting and solidification (processes). The absorption characteristics of electromagnetic waves in a solid greatly affect an elementary process in such the additive manufacturing processes using the powder bed. For example, because the absorption characteristics of the electromagnetic waves in a solid are affected by a material composition, it is extremely important to increase uniformity of material composition and a microstructure of the powder for realization of stable quality and high productivity in the entire additive manufacturing product.

Here, the absorption characteristics of the electromagnetic waves of copper and the copper alloy can be improved by, for example, simply adding a substance having a desired high absorption rate at a laser wavelength as a component other than copper. However, as shown in many past metallurgical studies, in a case where copper and the copper alloy are provided for a certain application, characteristics required for the application are realized for the first time by suitably selecting a kind of an element to be added to copper and the amount added thereof. Accordingly, a simple approach, such as adding various types of different elements having a high laser absorption rate to copper or a copper alloy having an optimized composition or increasing the amount added thereof, in order to improve the productivity and the quality of the metal AM formed body of copper or the copper alloy, in other words, in order to improve laser absorption of a raw material powder of copper or the copper alloy, may deteriorate performance of the copper alloy required for various applications. Therefore, it has been required to realize a copper alloy powder for the metal AM having improved laser absorption characteristics while maintaining a material composition capable of sufficiently ensuring the performance of the copper alloy required for various applications.

One important approach to improve the laser absorption characteristics of the powder is to improve a laser absorption ability of each particle by surface modification of each particle surface constituting the powder. For this surface modification, it is considered to coat the surface of each particle of the powder having a desired copper alloy composition with a substance exhibiting a high absorption rate with respect to a laser wavelength used in the metal AM. As an approach to such coating of the particle surface, a desired coating material can be formed on the particle surface using a wet process or a gas phase process. However, in such a coating process, there are problems in not only controlling a thickness of a coating layer on each particle, but also in the reproducibility of a coating thickness of the entire powder and homogeneity of the coating material. As a result, various problems occur in productivity or quality of a formed body.

In addition, for the copper alloy, as a result of various research and development in the past, a material that realizes a high mechanical strength while maintaining a high electrical conductivity, a material having an excellent heat resistance, and the like have been already developed. Even in the metal AM, there is a social demand for realizing a metal AM component having a desired shape using existing high-performance copper alloy materials.

However, when the material composition of the copper alloy of a final formed product was controlled while controlling amounts of components in the materials formed by coating, it became a large load of a manufacturing step, and also, there was a risk of causing many major problems regarding a deterioration in performance of a formed component caused by a variation in a composition or a variation in a microstructure, a deterioration in mass productivity of components, maintaining quality of components, and the like.

In addition, one factor that causes structural defects in the metal AM formed body is generation of voids caused by involution of a gas or the like. In a case where the additive manufacturing was performed by a PBF method using a copper alloy powder of the related art, a gas was generated due to impurities contained in the copper alloy powder at the time of melting the powder, a molten copper alloy or a solidified copper alloy trapped a gas component, voids were generated in the manufactured additive manufacturing product, and there was a risk that a stable high-quality additive manufacturing product could not be manufactured.

In addition, in a case of performing the additive manufacturing by irradiating the powder bed of the raw material with laser light or electron beams, and in a case where there is a lack of reproducibility of the microstructure related to a raw material powder including a composition reproducibility of powder particles in each portion irradiated with laser light or the like, a melting behavior of the powder is not uniform. As a result, there was a risk that this induced occurrence of structural defects of voids and the like in the formed body or a deterioration of mechanical characteristics due to the nonuniformity of the metal composition of the formed body occurred.

In addition, such reproducibility of the microstructure of the raw material powder includes reproducibility of the material composition of the powder, and has been the same problem even in other metal AM methods such as a binder jetting method. In the metal AM of the copper alloy, the improvement of the productivity was a major object due to the problems with a variety of raw materials as described above.

The present invention has been made in view of the circumstances described above, and an object thereof is to provide a copper alloy powder for the metal AM having a high reproducibility of a microstructure of a formed body manufactured by the metal AM and capable of stably manufacturing a high-quality additive manufacturing product with less structural defects such as voids and the like, and a method for manufacturing an additive manufacturing product.

### Solution to Problem

From the viewpoints described above, the present inventors have conducted research and development to manufacture a copper alloy powder for realizing a copper alloy component having high performance and high quality with high productivity by using a metal AM process while having a copper alloy composition required for practical applications. As a result, in a case where a powdering treatment was performed using a high-purity copper alloy as a raw material, when individual particle surface in a copper alloy powder is focused while maintaining a uniform composition with less impurities as a whole of the copper alloy powder, it was found that a thin layer is formed on a copper alloy particle surface irradiated with laser. In addition, compared to the inside of bulk copper alloy particles, in the thin layer formed on the copper alloy particle surface, it was found that a characteristic structure, in which a powder constituent element showing a high laser absorption than copper is present with high frequency, is spontaneously generated in a direct powdering process from a copper alloy raw material without performing an individual coating process or an additive process on the powder.

In addition to the structural characteristics of the copper alloy particle surface, it is found that, since the copper alloy powder for the metal AM is a copper alloy powder derived from a high-purity copper alloy raw material, the generation of a gas is suppressed during melting due to the small amount of impurities that lead to a gas component, and it is possible to manufacture a copper alloy powder for the metal AM capable of realizing a dense copper alloy formed body while having high thermal, electrical, and mechanical characteristics, and capable of realizing high productivity and high quality of the copper alloy formed body exhibiting high performance.

Specifically, it was found that, in a copper alloy powder, which is manufactured using, as a raw material, a copper alloy ingot containing Cr, which is maintaining a uniform composition with sufficiently reducing the amount of impurities, it was found that precipitates containing Cr can be formed on a copper crystal grain boundary and a copper crystal grain (on a surface of the copper crystal grain) on a surface of each of particles constituting the copper alloy powder, and in a case of performing the additive manufacturing by using the copper alloy powder for the metal AM having the such microstructure on a surface, it is possible to manufacture a dense copper alloy formed body with less structural defects such as voids and the like.

The present invention has been made based on the findings described above, and a copper alloy powder for the metal AM according to Aspect 1 of the present invention, which is used for the metal AM, includes a copper alloy containing Cr, and a Cr compound layer including a Cr-containing compound is formed on a surface of a copper alloy particle constituting a copper alloy powder.

According to the copper alloy powder for a metal AM of Aspect 1 of the present invention, the copper alloy powder for the metal AM includes the copper alloy containing Cr, and the Cr compound layer including the Cr-containing compound is formed on the copper crystal grain boundary and the copper crystal grain (on the surface of the copper crystal grain) on the surface of the particle constituting the copper alloy powder. Accordingly, laser absorption is efficiently performed on the surface of the particle constituting the copper alloy powder, a reproducibility of a microstructure of a formed body manufactured by the metal AM is high, and it is possible to stably manufacture a high-quality additive manufacturing product with less structural defects such as voids and the like.

In Aspect 2 of the present invention, in the copper alloy powder for the metal AM of Aspect 1, it is preferable that the Cr compound layer contains oxygen.

According to the copper alloy powder for the metal AM of Aspect 2 of the present invention, the Cr compound layer formed on the surface of the copper alloy particle constituting the copper alloy powder contains oxygen. Accordingly, the laser absorption is more efficiently performed on the surface of the copper alloy particle constituting the copper alloy powder, a reproducibility of a microstructure of a formed body manufactured by the metal AM is high, and it is possible to stably manufacture a high-quality additive manufacturing product with less structural defects such as voids and the like.

According to Aspect 3 of the present invention, in the copper alloy powder for the metal AM according to Aspect 1 or 2, it is preferable that, in a cross-sectional observation of the copper alloy particle constituting the copper alloy powder, the Cr-containing compound is distributed on a crystal grain boundary in a whole of the copper alloy particle.

According to the copper alloy powder for the metal AM of Aspect 3 of the present invention, in the whole of the copper alloy particle constituting the copper alloy powder, the Cr-containing compound is distributed on the crystal grain boundary. Accordingly, it is possible to manufacture an additive manufacturing product having excellent electrical conductivity, heat conductivity, and intensity.

According to Aspect 4 of the present invention, in the copper alloy powder for the metal AM according to any one of Aspects 1 to 3, it is preferable that a 50% cumulative particle diameter D50 based on a volume, which is measured by a laser diffraction and scattering method, is set to be in a range of 5 µm or more and 120 µm or less.

According to the copper alloy powder for the metal AM of Aspect 4 of the present invention, the 50% cumulative particle diameter D50 based on the volume measured by the laser diffraction and scattering method is set to be in a range of 5 µm or more and 120 µm or less. Accordingly, a particle size distribution is suitable for the metal AM, and it is possible to stably manufacture an additive manufacturing product.

According to Aspect 5 of the present invention, in the copper alloy powder for the metal AM according to any one of Aspects 1 to 4, it is preferable that a 10% cumulative particle diameter D10 based on the volume measured by a laser diffraction and scattering method is set to be in a range of 1 µm or more and 80 µm or less.

According to the copper alloy powder for the metal AM of Aspect 5 of the present invention, the 10% cumulative particle diameter D10 based on the volume measured by the laser diffraction and scattering method is set to be in a range of 1 µm or more and 80 µm or less. Accordingly, a particle size distribution is suitable for the metal AM, and it is possible to stably manufacture an additive manufacturing product.

According to Aspect 6 of the present invention, in the copper alloy powder for the metal AM according to any one of Aspects 1 to 5, it is preferable that a 90% cumulative particle diameter D90 based on a volume, which is measured by a laser diffraction and scattering method, is set to be in a range of 10 µm or more and 150 µm or less.

According to the copper alloy powder for the metal AM of Aspect 6 of the present invention, the 90% cumulative particle diameter D90 based on the volume measured by the laser diffraction and scattering method is set to be in a range of 10 µm or more and 150 µm or less. Accordingly, a particle size distribution is suitable for the metal AM, and it is possible to stably manufacture an additive manufacturing product.

It is preferable that a method for manufacturing an additive manufacturing product of Aspect 7 of the present invention includes a preparation step of preparing the copper alloy powder for the metal AM according to any one of Aspects 1 to 6, and a forming step of manufacturing an additive manufacturing product by sequentially repeating a first step of forming a powder bed including the copper alloy powder for the metal AM and a second step of forming a solidified bed by solidifying the copper alloy powder for the metal AM at a predetermined position in the powder bed to manufacture an additive manufacturing product.

According to the method for manufacturing the additive manufacturing product of Aspect 7 of the present invention, the copper alloy powder for the metal AM according to any one of Aspects 1 to 6 is used. Accordingly, a reproducibility of a microstructure of a formed body manufactured by the metal AM is high, and it is possible to stably manufacture a high-quality additive manufacturing product with less structural defects such as voids and the like.

According to Aspect 8 of the present invention, in the method for manufacturing the additive manufacturing product according to Aspect 7, it is preferable that the method further includes a heat treatment step of performing a heat treatment in a temperature range of 300°C or higher and a melting point of pure copper or lower after the forming step.

By performing a suitable heat treatment according to the application of the manufactured additive manufacturing product, a microstructure of the formed copper alloy can be controlled, and desired mechanical characteristics or electrical conductive characteristics can be realized. Since the heat treatment is performed in the temperature range of the manufacturing method according to Aspect 8 of the present invention, a formed body of a copper alloy, in which the microstructure is suitably controlled, is realized.

### Advantageous Effects of Invention

According to the present invention, it is possible to provide a copper alloy powder for the metal AM having a high reproducibility of a microstructure of a formed body manufactured by the metal AM and capable of stably manufacturing a high-quality additive manufacturing product with less structural defects such as voids and the like, and a method for manufacturing an additive manufacturing product.

### Brief Description of Drawings

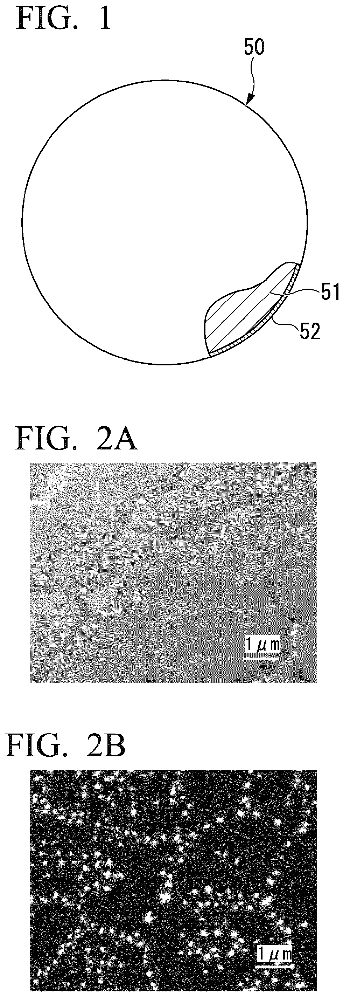

FIG. 1 is a schematic explanatory diagram of the metal AM of the present embodiment.
FIG. 2A is an analysis result (C18000) obtained by Auger electron spectroscopy of a particle surface after performing etching for 15 minutes from a particle outermost surface of a copper alloy particle constituting a copper alloy powder for the metal AM of the present embodiment, and is a secondary electron image.
FIG. 2B is an analysis result (C18000) obtained by Auger electron spectroscopy of a particle surface after performing etching for 15 minutes from a particle outermost surface of a copper alloy particle constituting a copper alloy powder for the metal AM of the present embodiment, and is a Cr mapping image.

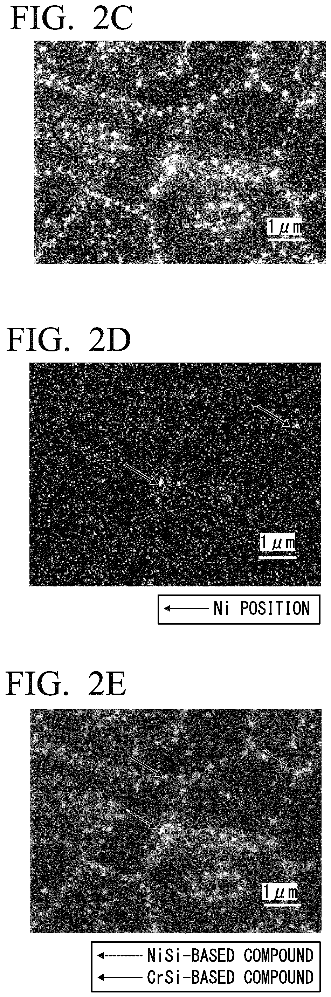

FIG. 2C is an analysis result (C18000) obtained by Auger electron spectroscopy of a particle surface after performing etching for 15 minutes from a particle outermost surface of a copper alloy particle constituting a copper alloy powder for the metal AM of the present embodiment, and is a Si mapping image.
FIG. 2D is an analysis result (C18000) obtained by Auger electron spectroscopy of a particle surface after performing etching for 15 minutes from a particle outermost surface of a copper alloy particle constituting a copper alloy powder for the metal AM of the present embodiment, and is a Ni mapping image.
FIG. 2E is an analysis result (C18000) obtained by Auger electron spectroscopy of a particle surface after performing etching for 15 minutes from a particle outermost surface of a copper alloy particle constituting a copper alloy powder for the metal AM of the present embodiment, and is an element mapping combined image.

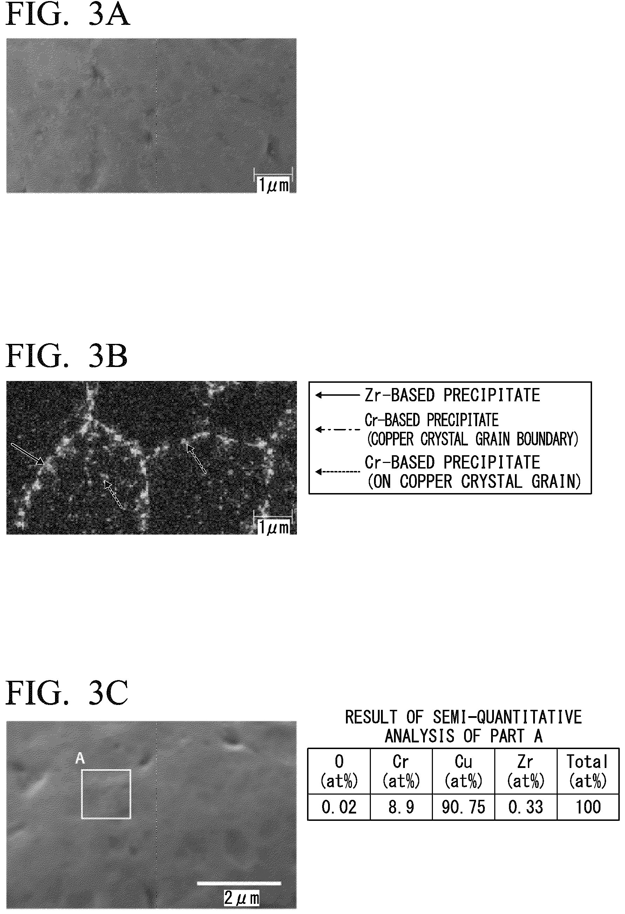

FIG. 3A is a diagram showing a result (C18150) of Auger electron spectroscopy of a surface of a particle constituting a copper alloy powder for the metal AM of the present embodiment, and is a secondary electron image of a particle surface after performing etching from an outermost surface for 15 minutes.
FIG. 3B is a diagram showing a result (C18150) of Auger electron spectroscopy of a surface of a particle constituting a copper alloy powder for the metal AM of the present embodiment, and is an element mapping combined image of the particle surface.
FIG. 3C is a diagram showing a result (C18150) of Auger electron spectroscopy of a surface of a particle constituting a copper alloy powder for the metal AM of the present embodiment, and is a result of a semi-quantitative analysis of a particle surface after performing etching from an outermost surface for 30 minutes.

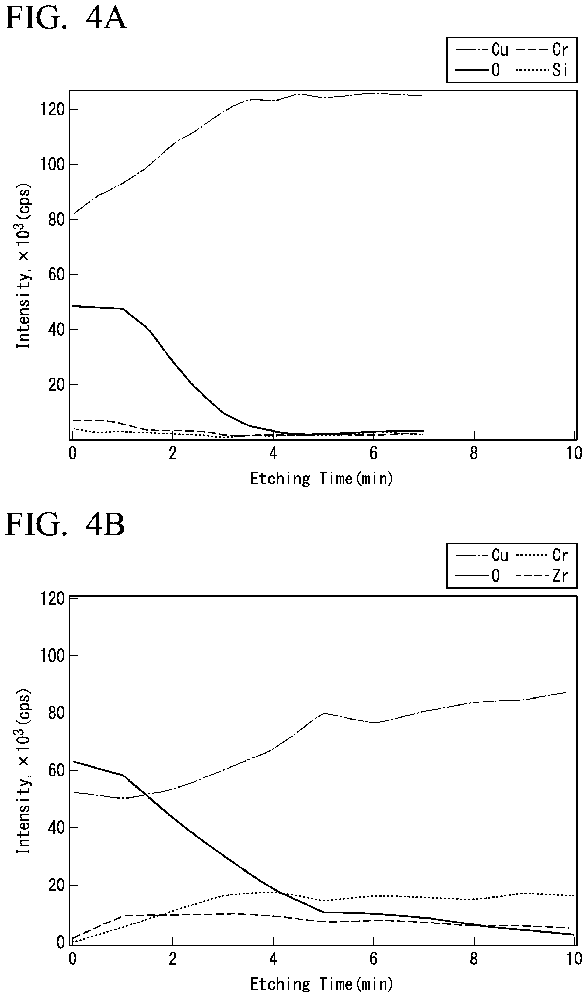

FIG. 4A is an example of intensity depth profiles of a surface of a particle constituting a copper alloy powder (C18000) for the metal AM of the present embodiment, obtained by Auger electron spectroscopy.
FIG. 4B is an example of intensity depth profiles of a surface of a particle constituting a copper alloy powder (C18150) for the metal AM of the present embodiment, obtained by Auger electron spectroscopy.

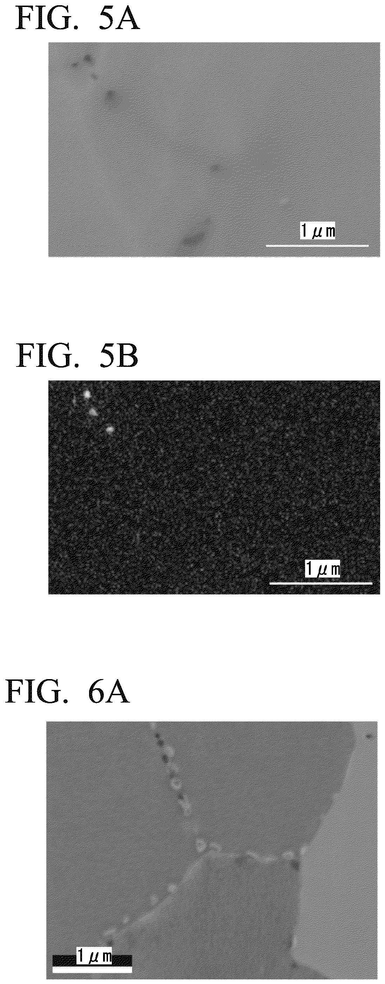

FIG. 5A is a secondary electron image, which is a result of Auger electron spectroscopy with respect to a particle cross section of a copper alloy powder for the metal AM (C18000) of the present embodiment.
FIG. 5B is an element mapping image of Cr, which is a result of Auger electron spectroscopy with respect to a particle cross section of a copper alloy powder for the metal AM (C18000) of the present embodiment.
FIG. 6A is a secondary electron image, which is a result of a scanning electron microscope analysis with respect to a particle cross section of a copper alloy powder for the metal AM (C18150) of the present embodiment.

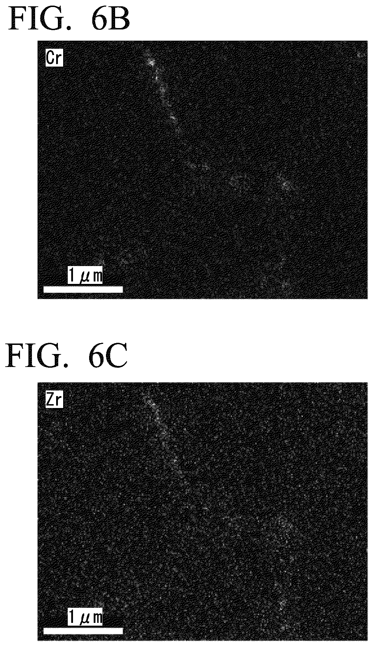

FIG. 6B is an element mapping image of Cr, which is a result of a scanning electron microscope analysis with respect to a particle cross section of a copper alloy powder for the metal AM (C18150) of the present embodiment.
FIG. 6C is an element mapping image of Zr, which is a result of a scanning electron microscope analysis with respect to a particle cross section of a copper alloy powder for the metal AM (C18150) of the present embodiment.

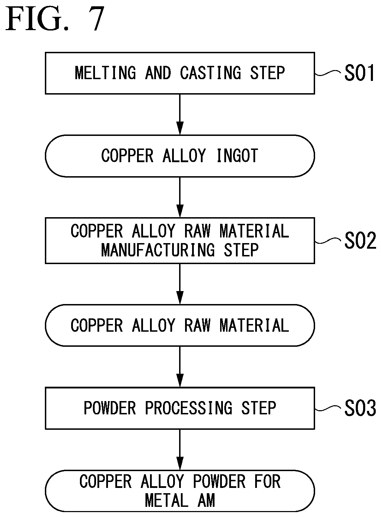

FIG. 7 is a flowchart of a method for manufacturing a copper alloy powder for the metal AM of the present embodiment.

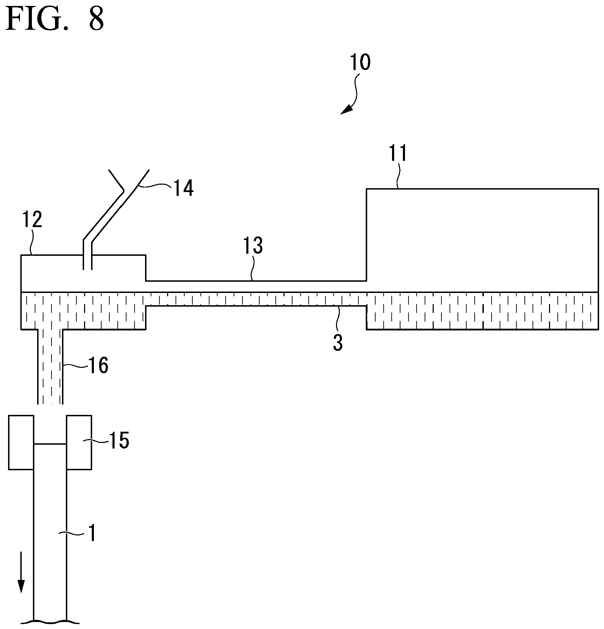

FIG. 8 is a schematic explanatory diagram of a continuous casting apparatus used in manufacturing a copper alloy powder for the metal AM of the present embodiment.

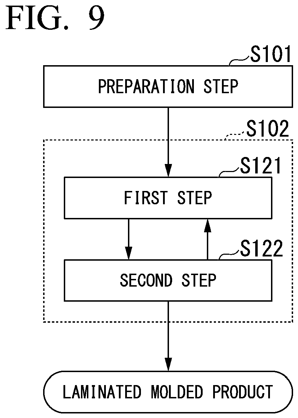

FIG. 9 is a flowchart showing a method for manufacturing an additive manufacturing product of the present embodiment.

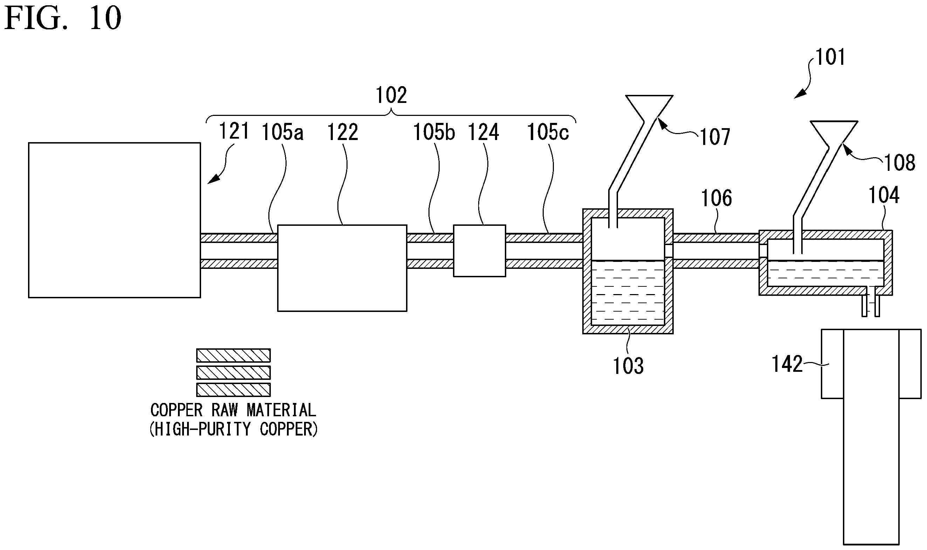

FIG. 10 is a schematic explanatory diagram of another continuous casting apparatus used in manufacturing a copper alloy powder for the metal AM of the present embodiment.

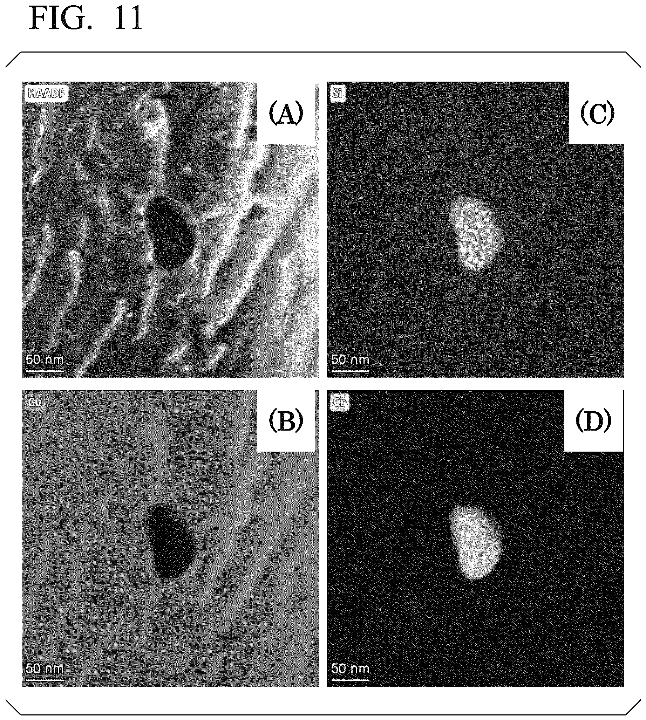

FIG. 11 is an example of an analysis result of a high-angle annular dark field scanning transmission electron microscopy (HAADF-STEM) of a particle surface of a copper alloy powder for the metal AM of the present embodiment, (A) shows a HAADF image, (B) shows Cu mapping, (C) shows Si mapping, and (D) shows Cr mapping.

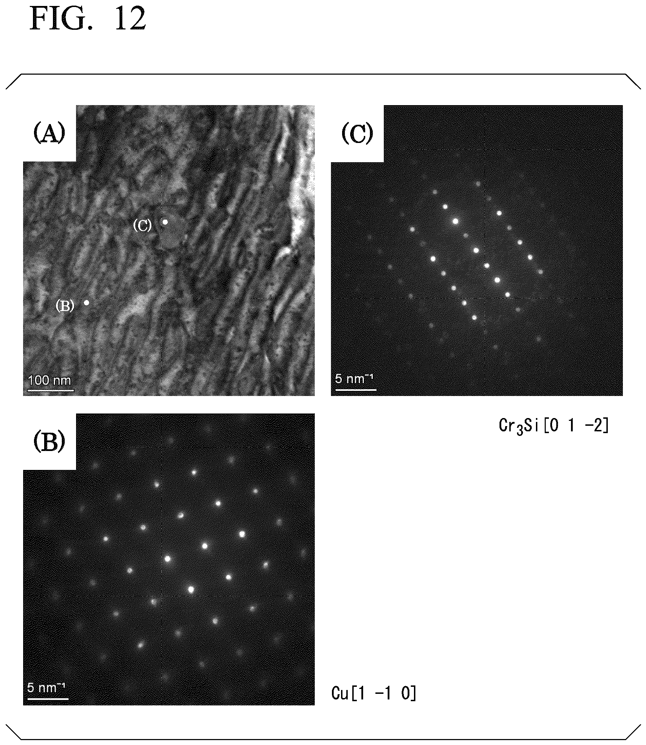

FIG. 12 is a result of electron diffraction analysis of a particle surface of a copper alloy powder for the metal AM of the present embodiment performed with a transmission electron microscope, (A) shows a bright field image, (B) shows an electron diffraction pattern of a Cu part (Cu[1-10]), and (C) shows an electron diffraction pattern of a CrSi-based compound derived from a CrSi-based precipitate (Cr₃Si[01-2]).

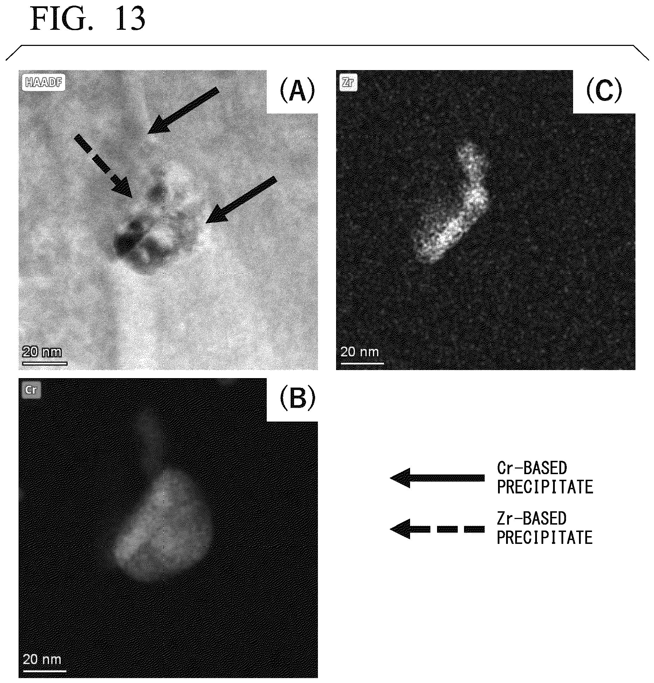

FIG. 13 is an example of an analysis result of a high-angle scattering annular dark field scanning transmission electron microscopy (HAADF-STEM) of a grain boundary precipitate of a copper alloy particle of a copper alloy powder for the metal AM of the present embodiment. (A) shows a HAADF image, (B) shows Cr mapping, and (C) shows Zr mapping. Arrows in (A) indicate Cr-based precipitates and Zr-based precipitates.

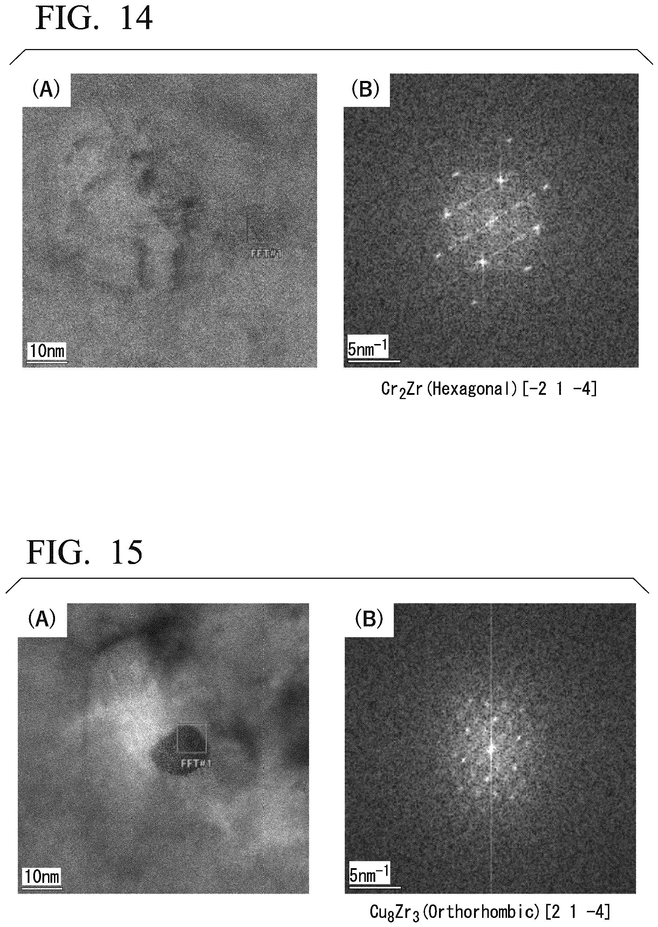

FIG. 14 is an example of an analysis result of a transmission electron microscopy of a precipitate on a grain boundary portion of a copper alloy powder for the metal AM of the present embodiment, (A) shows a bright field image, and (B) shows a diagram of fast Fourier transform (an analysis result of a square frame portion of (A), and Cr₂Zr(Hexagonal)[-21-4]).
FIG. 15 is an example of an analysis result of a transmission electron microscopy of a precipitate on a grain boundary portion of a copper alloy powder for the metal AM of the present embodiment, (A) shows a bright field image, and (B) shows a diagram of fast Fourier transform (an analysis result of a square frame portion of (A), and Cu₈Zr₃(Orthorhombic)[21-4]).

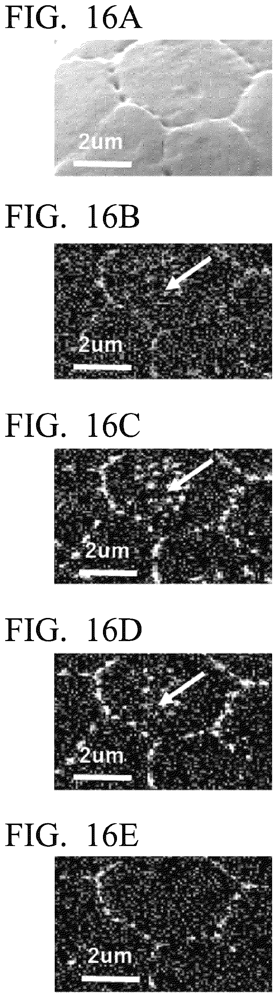

FIG. 16A is an analysis result (C18000) obtained by Auger electron spectroscopy of a particle surface of a copper alloy particle constituting a copper alloy powder for the metal AM of the present embodiment, and is a secondary electron image of a particle outermost surface before etching.
FIG. 16B is an analysis result (C18000) obtained by Auger electron spectroscopy of a particle surface of a copper alloy particle constituting a copper alloy powder for the metal AM of the present embodiment, and is a Cr mapping image of a particle outermost surface before etching. An arrow indicates presence of Cr-based precipitates on a copper crystal particle.
FIG. 16C is an analysis result (C18000) obtained by Auger electron spectroscopy of a particle surface of a copper alloy particle constituting a copper alloy powder for the metal AM of the present embodiment, and is a Cr mapping image of the particle surface after performing etching from the particle outermost surface shown in FIG. 16A for 5 minutes. An arrow indicates presence of Cr-based precipitates on a copper crystal particle.
FIG. 16D is an analysis result (C18000) obtained by Auger electron spectroscopy of a particle surface of a copper alloy particle constituting a copper alloy powder for the metal AM of the present embodiment, and is a Cr mapping image of the particle surface after performing etching from a particle outermost surface shown in FIG. 16A for 15 minutes. An arrow indicates presence of Cr-based precipitates on a copper crystal particle.
FIG. 16E is an analysis result (C18000) obtained by Auger electron spectroscopy of a particle surface of a copper alloy particle constituting a copper alloy powder for the metal AM of the present embodiment, and is a Cr mapping image of the particle surface after performing etching from a particle outermost surface shown in FIG. 16A for 30 minutes.

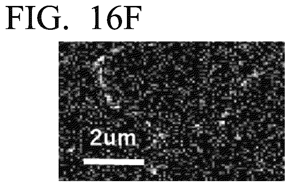

FIG. 16F is an analysis result (C18000) obtained by Auger electron spectroscopy of a particle surface of a copper alloy particle constituting a copper alloy powder for the metal AM of the present embodiment, and is a Cr mapping image of the particle surface after performing etching from a particle outermost surface shown in FIG. 16A for 50 minutes.

### Description of Embodiments

Hereinafter, a copper alloy powder for the metal AM of an embodiment of the present invention will be described with reference to the accompanying drawings.

The copper alloy powder for the metal AM of the present embodiment is a copper alloy powder used for the metal AM. The copper alloy powder for the metal AM of the present embodiment is particularly suitable for a PBF method using laser.

In a copper alloy particle 50 of the copper alloy powder for the metal AM of the present embodiment, as shown in FIG. 1, a Cr compound layer 52 including a Cr-containing compound is formed on a particle surface.

That is, it is preferable that the copper alloy particle 50 of the copper alloy powder for the metal AM of the present embodiment includes, as shown in FIG. 1, a particle main body 31 containing a copper alloy containing Cr, and the Cr compound layer 52 formed on an outer peripheral surface (or a surface layer) of the particle main body 51.

Here, in the present embodiment, a surface (a particle surface) (or a surface layer) of a copper alloy particle of the copper alloy powder for the metal AM refers to a region from an outermost surface of the particle to a depth of 100 nm.

In addition, in the copper alloy particle 50 of the copper alloy powder for the metal AM of the present embodiment, as shown in FIGS. 4A and 4B, the Cr compound layer 52 preferably contains an oxide.

In addition, a thickness of the Cr compound layer 52 on the particle surface of the copper alloy powder for the metal AM is preferably set to 1 nm or more and 100 nm or less.

More specifically, the thickness of the Cr compound layer 52 is preferably 1 nm or more, and may be 5 nm or more, may be 10 nm or more, may be 20 nm or more, may be 30 nm or more, or may be 50 nm or more. In addition, the thickness of the Cr compound layer 52 is preferably 100 nm or less, and may be 95 nm or less, may be 90 nm or less, may be 80 nm or less, or may be 70 nm or less.

The Cr compound layer 52 is a layer disposed on the outer peripheral surface (or the surface layer) of the particle main body 51 and is preferably a layer including a Cr compound, which includes a precipitate containing Cr. In the Cr compound layer 52, the Cr compound may be in a state of being included to be uniformly or unevenly dispersed in the Cr compound layer 52 as a dot-shaped precipitate. In the Cr compound layer 52, the Cr compound may be in a state of being included to be uniformly or unevenly dispersed in the Cr compound layer 52 as a precipitate having a plurality of indeterminate aggregated island shapes (an indeterminate aggregates).

In addition, the Cr compound may be precipitated along a copper crystal grain boundary on a surface of each particle main body 51.

In the Cr compound layer 52, the Cr compound may be in a state of being precipitated to continuously coat the outer peripheral surface (or the surface layer) of the particle main body 51. At this time, the entire outer peripheral surface of the particle main body 51 may be coated with the Cr compound, or a part (for example, 50% or more of the outer peripheral surface) of the outer peripheral surface (or the surface layer) may be continuously coated. A part (for example, 50% or more of the outer peripheral surface) of the outer peripheral surface (or the surface layer) of the particle main body 51 may be coated discontinuously (or in an island shape).

A condition, in which a particle surface consisting of SiO₂ is etched by an ion etching method at an etching rate of 1.08 nm/min, is set as a reference condition, and in this reference etching condition, the thickness of the Cr compound layer 52 can be calculated from time when an intensity (cps) of chromium (Cr) does not decrease or becomes a predetermined value or less, by etching the surface of the copper alloy particle 50 of the copper alloy powder for the metal AM, analyzing the surface of the copper alloy particle 50 of the copper alloy powder for the metal AM by Auger electron spectroscopy using a scanning Auger electron spectroscopy analysis apparatus PHI700xi manufactured by ULVAC-PHI, INCORPORATED, obtaining a Cr mapping image showing the Cr compound, and obtaining an intensity depth profile (a graph showing a relationship between intensity-etching time shown in FIG. 4A and FIG. 4B) of chromium (Cr).

That is, the thickness of the Cr compound layer 52 can be calculated as follows: time (min) when an intensity (cps) of chromium (Cr) does not decrease or becomes a predetermined value or less × the etching rate of 1.08 nm/min in the reference condition = the thickness of the Cr compound layer 52.

Furthermore, in the present embodiment, it is preferable that, in the cross-sectional observation of the copper alloy particle 50 constituting the copper alloy powder, the Cr-containing compound is distributed on the crystal grain boundary in the whole of the copper alloy particle. The whole of the copper alloy particle indicates the surface of the particle and an inside of the particle in one copper alloy particle.

As shown in FIGS. 2A to 2E, it is confirmed that the particle main body 51 of copper alloy particle 50 of the copper alloy powder for the metal AM of the present embodiment is polycrystalline, and the Cr-containing compound consisting of a compound containing Cr is dispersed on the surface of the particle main body 51. The Cr-containing compound is dispersed on both a crystal grain boundary and inside of a crystal grain.

In the present embodiment, the diameter or the major axis along the particle surface of the Cr-containing compound derived from the Cr-based precipitate, which is present in the Cr compound layer 52, is preferably set to be in a range of 1 nm or more and 1,000 nm or less. The diameter or the major axis along the particle surface of the Cr-containing compound may be 800 nm or less, may be 500 nm or less, may be 300 nm or less, may be 100 nm or less, or may be 80 nm or less. In addition, the lower limit of the diameter or the major axis along the particle surface of the Cr-containing compound may be 5 nm or more or may be 10 nm or more, and the upper limit thereof may be 90 nm or less or may be 80 nm or less.

Here, the diameter or the major axis along the particle surface of the Cr-containing compound is a diameter or a major axis of each aggregate of a precipitate of each Cr-containing compound along the outer peripheral surface of the particle main body 51, in a case where the Cr-containing compound is dispersed in a dotted shape or in an undetermined island shape on the outer peripheral surface of the particle main body 51, and can be measured from an image obtained by analyzing the outer peripheral surface of the particle main body 51 by Auger electron spectroscopy using a scanning Auger electron spectroscopy analysis apparatus PH1700xi manufactured by ULVAC-PHI, INCORPORATED.

In a case where the precipitates derived from the Cr-containing compound are dispersed on the surface of the particle main body 51 of the copper alloy particle 50 of the copper alloy powder for the metal AM of the present embodiment, regarding a density of precipitates derived from the Cr-containing compound of the Cr compound layer 52, a part having an area ratio of 15% or more can be observed or it is preferable that a part having an area ratio of 20% or more can be observed, on any part of an outermost surface of the Cr compound layer 52.

The density of precipitates derived from the Cr-containing compound in the Cr compound layer 52 can be obtained by calculating an area occupancy rate of the Cr-containing compound (the Cr-based precipitate) from a size and a number of precipitates of the Cr-containing compound per 1 µm² using an image obtained by analyzing the outermost surface of the Cr compound layer 52 by Auger electron spectroscopy using a scanning Auger electron spectroscopy analysis apparatus PHI700xi manufactured by ULVAC-PHI, INCORPORATED.

In a case where the precipitate derived from the Cr-containing compound in the Cr compound layer 52 is precipitated along the copper crystal grain boundary of the surface of the particle main body 51, or in a case where the surface of the particle main body 51 is observed using Auger electron spectroscopy, the copper crystal grain boundary can be captured as a line. In this case, a density (a line density) per unit length of the precipitate of the copper crystal grain boundary derived from the Cr-containing compound can be obtained.

The copper crystal grain boundary of the image obtained by analyzing the outermost surface of the Cr compound layer 52 by Auger electron spectroscopy using a scanning Auger electron spectroscopy analysis apparatus PHI700xi manufactured by ULVAC-PHI, INCORPORATED, is observed, and the line density per grain boundary length of 1 µm may be obtained from a proportion of the precipitate derived from the Cr-containing compound occupying the grain boundary length of 1 µm. In this case, it is preferable that a portion having the line density of 30% or more can be observed.

In addition, as shown in FIGS. 5A and 5B and FIGS. 6A to 6C, in the copper alloy particle 50 of the copper alloy powder for the metal AM of the present embodiment, as a result of the analysis of the cross-sectional observation of the particle, the Cr-containing compound consisting of the compound containing Cr is dispersed on the crystal grain boundary inside the particle main body 51.

In the present embodiment, as a result of the cross-sectional observation of the particle, the diameter or the major axis of the Cr-containing compound observed on the crystal grain boundary inside the particle main body 51 is preferably set to be in a range of 1 nm or more and 1,000 nm or less.

The copper alloy constituting the copper alloy particle 50 of the copper alloy powder for the metal AM of the present embodiment preferably contains Cr, as an alloy element, in a range of 0.01 mass% or more and 10 mass% or less.

The lower limit of the amount of Cr is more preferably 0.1 mass% or more, and even more preferably 0.5 mass% or more. The upper limit of the amount of Cr is more preferably 3 mass% or less, and even more preferably 1.5 mass% or less.

In addition, in the present embodiment, the copper alloy constituting the copper alloy particle 50 of the copper alloy powder for the metal AM may contain an alloy element other than Cr. For example, the copper alloy may contain Si and Ni as an alloy element other than Cr. At this time, as shown in FIGS. 2A to 2E, it is preferable that the Cr-containing compound is distributed on the surface of the particle main body 51. In addition, as shown in FIGS. 5A and 5B, in a cross-sectional observation of the particle, it is preferable that the Cr-containing compound is distributed on the crystal grain boundary.

As the copper alloy containing Cr, Si and Ni, for example, a copper alloy having a composition (a composition corresponding to so-called C18000) containing Cr in a range of 0.1 mass% or more and 0.8 mass% or less, Si in a range of 0.4 mass% or more and 0.8 mass% or less, and Ni in a range of 1.8 mass% or more and 3.0 mass% or less, with a balance consisting of copper and impurities is an exemplary example.

In a composition of the copper alloy constituting the copper alloy particle 50 of the copper alloy powder for the metal AM, an error of an accuracy of the concentrations is ±10% (excluding O, H, S, and N).

In the copper alloy containing Cr, Si, and Ni, the copper alloy may contains a CrSi-based compound and a NiSi-based compound. Cr₃Si may be an exemplary example as the CrSi-based compound in the Cr-containing compound. Ni₅Si₂ may be an exemplary example as the NiSi-based compound.

The copper alloy containing Cr, Si, and Ni, may contain a copper alloy containing Cr, Si, and Ni and an oxide of this copper alloy, in addition to the CrSi-based compound and the NiSi-based compound. The oxide may be formed when the copper alloy powder for the metal AM is exposed to an oxygen-containing atmosphere, a moisture-containing atmosphere, or the like.

The copper alloy may constitute the copper alloy including Zr as the alloy element other than Cr. The copper alloy may contain Zr in a range of 0.01 mass% or more and 10 mass% or less. At this time, as shown in FIGS. 3A to 3C, it is preferable that a Zr-containing compound is distributed on the surface of the particle main body 51. In addition, as shown in FIGS. 6A to 6C, in a cross-sectional observation of the particle, it is preferable that the Zr-containing compound is distributed on the crystal grain boundary.

As the copper alloy containing Cr and Zr, for example, a copper alloy having a composition (a composition corresponding to so-called C18150) containing Cr in a range of 0.5 mass% or more and 1.5 mass% or less, and Zr in a range of 0.02 mass% or more and 0.2 mass% or less, with a balance consisting of copper and impurities is an exemplary example.

Specifically, as the Cr-containing compound included in the copper alloy containing Cr and Zr, Cr₂Zr is an exemplary example. In addition, in the Cr-containing layer 52, Cr may exist as an alone element.

The Cr-containing layer 52 preferably has an oxide of an element constituting the particle main body 51.

The copper alloy containing Cr and Zr preferably has the Zr-containing compound, and as the Zr-containing compound, Cu₈Zr₃ is an exemplary example.

In the present embodiment, the alloy element refers to Cr, Si, Ni, and Zr. The copper alloy constituting the copper alloy particle 50 of the copper alloy powder for the metal AM has one or more element selected from a group consisting of Cr, Si, Ni, and Zr, as the alloy element. In addition, in the present embodiment, the impurities are components containing impurity elements, which will be described below, O, H, S, and N.

In addition, the copper alloy constituting the copper alloy particle 50 of the copper alloy powder for the metal AM may contain an additive element other than the alloy element and an impurity element (excluding O, H, S, and N).

In the present embodiment, the additive element is an element intentionally added to the copper alloy powder for the metal AM of the present embodiment. Meanwhile, the impurity element (excluding O, H, S, and N) is an element that is unintentionally mixed in the copper alloy powder for the metal AM of the present embodiment, and is derived from impurities contained in contamination or a raw material in an extremely small amount during a manufacturing step. The impurity element may be inevitable impurities.

As the additive element other than the alloy element and the impurity element (excluding O, H, S, and N) constituting the copper alloy particle 50 of the copper alloy powder for the metal AM, Mg, Ti, Al, Zn, Ca, Sn, Pb, Fe, Mn, Te, Nb, P, Co, Sb, Bi, Ag, Ta, W, Mo, and the like are exemplary examples. The additive element other than the alloy and the impurity element may contain at least one element selected from a group consisting of Mg, Ti, Al, Zn, Ca, Sn, Pb, Fe, Mn, Te, Nb, P, Co, Sb, Bi, Ag, Ta, W, Mo, and the like.

Here, the total amount of the additive element other than the alloy element and the impurity element (excluding O, H, S, and N) constituting the copper alloy particle 50 of the copper alloy powder for the metal AM may be 0.07 mass% or less, may be 0.06 mass% or less, may be 0.05 mass% or less, and is set to preferably 0.04 mass% or less, more preferably 0.03 mass% or less, even more preferably 0.02 mass% or less, and still more preferably 0.01 mass% or less.

In addition, the upper limit of the amount of each of the additive element other than the alloy element and the impurity element (excluding O, H, S, and N) constituting the copper alloy particle 50 of the copper alloy powder for the metal AM is set to preferably 30 mass ppm or less, more preferably 20 mass ppm or less, and even more preferably 15 mass ppm or less.

In the present embodiment, the copper alloy constituting the copper alloy particle 50 of the copper alloy powder for the metal AM preferably has Cr in a range of 0.01 mass% or more and 10 mass% or less, with a balance consisting of copper and impurities. In the present embodiment, the copper alloy constituting the copper alloy particle 50 of the copper alloy powder for the metal AM preferably has Cr in a range of 0.01 mass% or more and 10 mass% or less, with a balance consisting of copper, said additive element, and impurities.

In the copper alloy powder for the metal AM of the present embodiment, it is preferable that a 50% cumulative particle diameter D50 based on the volume measured by a laser diffraction and scattering method is set to be in a range of 5 µm or more and 120 µm or less, a 10% cumulative particle diameter D10 is set to be in a range of 1 µm or more and 80 µm or less, and a 90% cumulative particle diameter D90 is set to be in a range of 10 µm or more and 150 µm or less.

The lower limit of the 50% cumulative particle diameter D50 is more preferably 10 µm or more and even more preferably 15 µm or more. The upper limit of the 50% cumulative particle diameter D50 is more preferably 100 µm or less and even more preferably 90 µm or less.

In addition, the lower limit of the 10% cumulative particle diameter D10 is more preferably 5 µm or more and even more preferably 10 µm or more. The upper limit of the 10% cumulative particle diameter D10 is more preferably 70 µm or less and even more preferably 60 µm or less.

In addition, the lower limit of the 90% cumulative particle diameter D90 is more preferably 20 µm or more and even more preferably 30 µm or more. The upper limit of the 90% cumulative particle diameter D90 is more preferably 140 µm or less and even more preferably 120 µm or less.

An example of a method for manufacturing the copper alloy powder for the metal AM of the present embodiment will be described with reference to a flowchart of FIG. 7. In the present embodiment, a copper alloy powder suitable for the laser PBF method is manufactured.

The method for manufacturing the copper alloy powder for the metal AM of the present embodiment includes a melting and casting step S01 of obtaining a copper alloy ingot, a copper alloy raw material manufacturing step S02 of processing the obtained copper alloy ingot to a linear rod material to obtain a copper alloy raw material, and a powder processing step S03 of processing the copper alloy raw material to a powder.

### (Melting and casting step S01)

First, a copper alloy ingot having a predetermined composition is manufactured. The melting and casting step S01 includes a melting step, an alloy element adding step, and a continuous casting step. Here, in the present embodiment, a copper alloy ingot 1 is manufactured by using a continuous casting apparatus 10 shown in FIG. 8.

The continuous casting apparatus 10 includes a melting furnace 11, a tundish 12 disposed downstream of the melting furnace 11, a connecting pipe 13 connecting the melting furnace 11 and the tundish 12, an addition unit 14 adding an alloy element to the tundish 12, a continuous casting mold 15 disposed on a downstream side of the tundish 12, and a pouring nozzle 16 pouring a molten copper alloy from the tundish 12 into the continuous casting mold 15.

In the melting furnace 11of the molten copper supply unit, the copper raw material is melted in a non-oxidizing atmosphere (an inert gas atmosphere or a reducing atmosphere) to obtain molten copper 3 (the melting step).

Here, the copper raw material melted in the melting furnace 11 is high-purity copper having a purity of copper of 99.99 mass% or more (for example, high-purity electrolytic copper or oxygen-free copper). The copper raw material to be melted is high-purity copper with 4N grade (99.99 mass%) or more, but is more preferably high-purity copper with 5N grade (99.999 mass%) or more, and even more preferably high-purity copper with 6N (99.9999 mass%) or more. In addition, the obtained molten copper 3 is preferably molten oxygen-free copper.

In the connecting pipe 13, the obtained molten copper 3 is supplied to the tundish 12 in a state where the non-oxidizing atmosphere (the inert gas atmosphere or the reducing atmosphere) is maintained. The connecting pipe 13 is disposed between the melting furnace 11 and the tundish 12, and the molten copper 3 passes through the connecting pipe 13 in the non-oxidizing atmosphere.

In addition, in the tundish 12, the molten copper 3 is held in the non-oxidizing atmosphere (the inert gas atmosphere or the reducing atmosphere).

Since the melting furnace 11, the connecting pipe 13, and the tundish 12 are in the non-oxidizing atmosphere (the inert gas atmosphere or the reducing atmosphere), gas components (O and H) in the molten copper 3 are reduced.

In the tundish 12, an alloy element is suitably added to the molten copper 3 using the addition unit 14 (the alloy element adding step). In addition, an additive element may be suitably added here.

By adding the alloy element to the molten copper 3, in which the gas component (O and H) is sufficiently reduced, an addition yield of the alloy element is excellent. Accordingly, it is possible to reduce the amount of the alloy element used, and reduce the manufacturing cost of the copper alloy.

In addition, by adding the alloy element to the molten copper 3 flowing the inside of the tundish 12, the alloy element is uniformly melted, and it is possible to continuously manufacture a molten copper alloy having a stable component value.

The obtained molten copper alloy is poured into the continuous casting mold 15 through the pouring nozzle 16, thereby continuously manufacturing the copper alloy ingot 1 (the continuous casting step).

In the present embodiment, a copper alloy ingot having a circular cross section is manufactured.

Here, in the present embodiment, in the obtained copper alloy ingot 1, the O concentration is set to 10 mass ppm or less and the H concentration is set to 5 mass ppm or less.

In the obtained copper alloy ingot 1, the S concentration is preferably set to 15 mass ppm or less.

In addition, in the obtained copper alloy ingot 1, the total amount of the additive element other than Cu and the alloy element and the impurity element is preferably 0.04 mass% or less.

### (Copper alloy raw material manufacturing step S02)

Next, the copper alloy ingot obtained in the melting and casting step S01 is processed into a linear rod material to manufacture a copper alloy raw material. The copper alloy raw material manufacturing step S02 includes an extrusion step, a drawing step, and a cutting step.

In the copper alloy raw material manufacturing step S02, first, the copper alloy ingot having a circular cross section is heated and subjected to hot extrusion processing to form a rod material having a predetermined diameter (the extrusion step).

In the present embodiment, a heating temperature during the hot extrusion processing is preferably set to be in a range of 700°C or higher and 1,000°C or lower.

Next, the obtained rod material is subjected to drawing processing to obtain a wire rod having predetermined diameter (the drawing step). The temperature of the drawing processing is not particularly limited, but is preferably set to be in a range of - 200°C to 200°C, at which cold or warm rolling is performed, and particularly preferably room temperature.

The obtained wire rod is cut to have a predetermined length to obtain a copper alloy raw material (the cutting step).

Here, the O concentration of the obtained copper alloy raw material is preferably 10 mass ppm or less and the H concentration thereof is preferably 5 mass ppm or less.

In addition, the S concentration of the obtained copper alloy raw material is preferably 15 mass ppm or less.

Furthermore, the total amount of the additive element other than Cu and the alloy element and the impurity element (excluding O, H, and S) in the obtained copper alloy raw material is preferably 0.04 mass% or less.

### (Powder processing step S03)

Next, an atomizing treatment is performed using the copper alloy raw material obtained in the copper alloy raw material manufacturing step S02 to manufacturing a copper alloy powder for the metal AM.

This powder processing step S03 includes a melting step, an atomizing treatment step, and a classification step.

In this melting step, the copper alloy raw material is heated and melted to obtain a molten alloy. Here, in the present embodiment, an atmosphere at the time of melting is preferably a non-oxidizing atmosphere.

In the atomizing treatment step, a powder is obtained by, for example, a gas atomizing method. That is, the molten alloy obtained in the melting step is sprayed with a high-pressure gas and liquid droplets of the molten alloy are rapidly cooled to manufacture a powder having a spherical shape or a shape similar to the spherical shape. As a gas used in the gas atomizing method, an inert gas such as argon or nitrogen can be used.

In the classification step, the obtained powder is subjected to a classification treatment to obtain a copper alloy powder having a predetermined particle size distribution.

The melting temperature of the copper alloy raw material in the gas atomizing treatment (the temperature during the gas atomizing treatment) is preferably a melting point of copper or higher and 1,500°C or lower. The melting temperature during the gas atomizing treatment may be 1,085°C or higher and 1,500°C or lower.

Here, in the present embodiment, as described above, since the atomizing treatment is performed using the molten alloy derived from the copper alloy raw material, in which the amount of the impurity element (excluding O, H< S, and N) is sufficiently reduced, the alloy element such as Cr or the like is suppressed from being consumed by reacting with the impurity element (excluding O, H< S, and N), and the Cr-containing compound can be generated.

In addition, in the present embodiment, since the atomizing treatment is performed using the molten alloy derived from the copper alloy raw material, in which an amount of impurities (the impurity element and components containing O, H, S, and N) is sufficiently reduced, the alloy element such as Cr or the like is suppressed from being consumed by reacting with the impurities (the impurity element and components containing O, H, S, and N), and the Cr-containing compound can be generated.

By each step described above, the copper alloy powder for the metal AM of the present embodiment is manufactured. In the copper alloy powder for the metal AM of the present embodiment, the O concentration is preferably 1,000 mass ppm or less and the H concentration is preferably 5 mass ppm or less. In addition, the S concentration is preferably 10 mass ppm or less.

Specifically, the O concentration is preferably 2,700 mass ppm or less, more preferably 1,000 mass ppm or less, and even more preferably 900 mass ppm or less. In addition, the lower limit of the O concentration is not particularly limited, but may be a value not including 0 (or a value more than 0).

When the O concentration is high, foreign materials remain in a formed body in the form of oxygen, oxide, or the like, which may deteriorate various properties of the formed body.

The H concentration is preferably 90 mass ppm or less, more preferably 60 mass ppm or less, and even more preferably 5 mass ppm or less. In addition, the lower limit of the H concentration is not particularly limited, but may be a value not including 0 (or a value more than 0).

In addition, the S concentration may be 90 mass ppm or less, may be 60 mass ppm or less, and is preferably 30 mass ppm or less. Furthermore, the S concentration of the copper alloy powder for the metal AM is more preferably 10 mass ppm or less. In addition, the lower limit of the S concentration is not particularly limited, but may be a value not including 0 (or a value more than 0).

Furthermore, in a step performed under a finite pressure, such as the atomizing treatment or the like, the powder may include an atmosphere component, since the atmosphere component is included in an air or in the step. For example, the powder may contain nitrogen derived from the atmosphere component.

In the copper alloy powder for the metal AM of the present embodiment, the nitrogen concentration (the N concentration) is desirably 30 mass ppm, more desirably 20 mass ppm, and even more desirably 10 mass ppm or less. In addition, in the copper alloy powder for the metal AM of the present embodiment, the nitrogen concentration (the N concentration) is desirably 30 mass ppm, more desirably 20 mass ppm, even more desirably 10 mass ppm or less, and still more desirably 5 mass ppm or less. In addition, the lower limit of the N concentration is not particularly limited, but may be a value not including 0 (or a value more than 0).

The copper alloy powder for the metal AM may contain the additive element other than the alloy element and impurity element in a range that does not affect the properties.

Here, the total amount of the additive element and the impurity element (excluding O, H, S, and N) may be 0.07 mass% or less, may be 0.06 mass% or less, may be 0.05 mass% or less, and is set to preferably 0.04 mass% or less, more preferably 0.03 mass% or less, even more preferably 0.02 mass% or less, and still more preferably 0.01 mass% or less.

In addition, the upper limit of the amount of each of the additive element and the impurity element (excluding O, H, S, and N) is set to preferably 30 mass ppm or less, more preferably 20 mass ppm or less, and even more preferably 15 mass ppm or less.

Next, a method for manufacturing an additive manufacturing product of the present embodiment will be described with reference to a flowchart of FIG. 9.

The method for manufacturing an additive manufacturing product of the present embodiment includes a preparation step S101 of preparing the copper alloy powder for the metal AM, a forming step S102 of manufacturing the additive manufacturing product by sequentially repeating a first step S121 of forming a powder bed including the copper alloy powder for the metal AM and a second step S122 of forming a solidified bed by solidifying the copper alloy powder for the metal AM at a predetermined position in the powder bed.

By performing such steps, an additive manufacturing product having a predetermined shape is manufactured. Since the copper alloy powder for the metal AM of the present embodiment is used, this additive manufacturing product has excellent mechanical characteristics with less structural defects such as voids and the like.

According to the copper alloy particle 50 constituting the copper alloy powder for the metal AM of the present embodiment configured as described above, the copper alloy particle 50 consists of the copper alloy containing Cr, and the Cr compound layer 52 including the Cr-containing compound is formed on the surface of the particle main body 51. Accordingly, laser absorption is efficiently performed on the particle surface, a reproducibility of a microstructure of a formed body manufactured by the metal AM is high, and it is possible to stably manufacture a high-quality additive manufacturing product with less structural defects such as voids and the like.

In the particle 50 constituting the copper alloy powder for the metal AM of the present embodiment, in a case where the Cr compound layer 52 contains the oxide of an element constituting the particle main body 51, the laser absorption is more efficiently performed on the particle surface, a reproducibility of a microstructure of a formed body manufactured by the metal AM is high, and it is possible to stably manufacture a high-quality additive manufacturing product with less structural defects such as voids and the like.

In addition, in the particle 50 constituting the copper alloy powder for the metal AM of the present embodiment, in a case where the Cr-containing compound is distributed on the crystal grain boundary in the cross-sectional observation of the particle main body 51, it is possible to manufacture an additive manufacturing product having excellent electrical conductivity, heat conductivity, and intensity.

Here, in the particle 50 constituting the copper alloy powder for the metal AM of the present embodiment, in a case where the copper alloy constituting the particle main body 51 contains Zr, and the Zr-containing compound is distributed on the surface of the particle main body 51, the laser absorption is more efficiently performed on the particle surface, a reproducibility of a microstructure of a formed body manufactured by the metal AM is high, and it is possible to stably manufacture a high-quality additive manufacturing product with less structural defects such as voids and the like.

In the particle 50 constituting the copper alloy powder for the metal AM of the present embodiment, in a case where the copper alloy constituting the particle main body 51 contains Zr, and the Zr-containing compound is distributed on the crystal grain boundary in the cross-sectional observation of the particle main body 51, it is possible to manufacture an additive manufacturing product having excellent electrical conductivity, heat conductivity, and intensity.

Furthermore, in the copper alloy powder for the metal AM of the present embodiment, in a case where the 50% cumulative particle diameter D50 based on the volume measured by the laser diffraction and scattering method is set to be in a range of 5 µm or more and 120 µm or less, a particle size distribution is suitable for the metal AM, and it is possible to stably manufacture an additive manufacturing product.

In addition, in the copper alloy powder for the metal AM of the present embodiment, in a case where the 10% cumulative particle diameter D10 based on the volume measured by the laser diffraction and scattering method is set to be in a range of 1 µm or more and 80 µm or less, a particle size distribution is suitable for the metal AM, and it is possible to stably manufacture an additive manufacturing product.

In addition, in the copper alloy powder for the metal AM of the present embodiment, in a case where the 90% cumulative particle diameter D90 based on the volume measured by the laser diffraction and scattering method is set to be in a range of 10 µm or more and 150 µm or less, a particle size distribution is suitable for the metal AM, and it is possible to stably manufacture an additive manufacturing product.

In the method for manufacturing the additive manufacturing product of the present embodiment, the copper alloy powder for the metal AM of the present embodiment is used. Accordingly, a reproducibility of a microstructure of a formed body manufactured by the metal AM is high, and it is possible to stably manufacture a high-quality additive manufacturing product with less structural defects such as voids and the like.

Hereinabove, the copper alloy powder for the metal AM and the method for manufacturing the additive manufacturing product of the embodiment of the present invention have been described, but the present invention is not limited thereto, and modifications can be suitably performed within a range not departing from the technical ideas of the invention.

For example, in the embodiment described above, it has been described that the copper alloy powder for the metal AM is manufactured by the gas atomizing method, but the invention is not limited thereto, and the copper alloy powder for the metal AM may be manufactured by a water atomizing method, a centrifugal force atomizing method, a plasma atomizing method, or the like.

In addition, the copper alloy powder for the metal AM obtained as described above may be suitably subjected to a heat treatment by controlling the atmosphere to stabilize the structure and the like.

Furthermore, in the present embodiment, it has been described that the copper alloy powder for the metal AM suitable for the PBF method using laser is manufactured, but the invention is not limited thereto, and it may be a copper alloy powder for the metal AM suitable for other metal AM.

In addition, in the present embodiment, it has been described that the copper alloy ingot is manufactured using the continuous casting apparatus shown in FIG. 8, but the invention is not limited thereto, and other casting apparatuses may be used.

For example, a continuous casting apparatus 101 shown in FIG. 10 may be used. The continuous casting apparatus 101 includes an oxygen-free copper supply means (a molten copper supply unit) 102 disposed at an uppermost stream portion, a heating furnace 103 disposed downstream thereof, a tundish 104 which is disposed downstream of the heating furnace 103 and to which molten copper is supplied, molten metal supply paths 105a, 105b, and 105c connecting the oxygen-free supply means 102 and the heating furnace 103, a pipe 106 connecting the heating furnace 103 and the tundish 104, an addition means (addition units) 107 and 108 for adding the alloy element in a non-oxidizing atmosphere, and a continuous casting mold 42. The inside of each of the oxygen-free copper supply means 102, the heating furnace 103, the tundish 104, the molten metal supply paths 105a, 105b, and 105c, and the pipe 106 is set to the non-oxidizing atmosphere.

The oxygen-free copper supply means 102 is configured with a melting furnace 121 for melting a copper raw material, a holding furnace 122 for temporarily holding molten copper obtained by being melted in the melting furnace 121, a degassing treatment device 124 for removing oxygen and hydrogen in the molten copper, and the molten metal supply paths 105a, 105b, and 105c connecting these.

The degassing treatment device 124 includes a gas bubbling device as a stirring means such that the molten copper is stirred in the inside thereof, and, for example, bubbling or the like due to an inert gas is performed, to remove oxygen and hydrogen from the molten copper.

The inside of the molten metal supply paths 105a, 105b, and 105c is set to the non-oxidizing atmosphere in order to prevent the molten copper and the molten oxygen-free copper from being oxidized. The non-oxidizing atmosphere is formed, for example, by blowing an inert gas such as a mixed gas of nitrogen and carbon monoxide or argon into the molten metal supply paths.

The addition means for adding an alloy element includes a first addition means 107 disposed in the heating furnace 103 and a second addition means 108 disposed in the tundish 104.

When the alloy element is continuously or intermittently charged from the first addition means 107 provided in the heating furnace 103, the alloy element is added into the molten oxygen-free copper stored in the heating furnace 103. Here, the molten oxygen-free copper stored in a storage unit is heated by a high-frequency induction coil, and melting of the added alloy element is promoted.

In addition, when the alloy element is continuously or intermittently charged from the second addition means 108 provided in the tundish 104, the alloy element is added into the molten oxygen-free copper flowing in the tundish 104. Here, since the molten oxygen-free copper flowing in the tundish 104 is heated in the heating furnace 103 to have a high temperature and flows in the tundish 104, the melting of the added alloying element is promoted.

### Examples

Hereinafter, results of experiments for confirmation performed to confirm the effects of the present invention will be described.

### (Examples of the present invention)

First, an ingot of C18000 and an ingot of C18150 having a composition shown in Table 1 was manufactured using a copper raw material consisting of high-purity copper of 4N grade by the manufacturing method described in the embodiment (impurities shown in Table 1 exclude O, H, and S from the impurities).

Next, by using the manufactured ingot of C18000 and the manufactured ingot of C18150 as a raw material, a C18000 powder and a C18150 powder for the metal AM having a composition shown in Table 2 was manufactured by a gas atomizing method using an argon gas, and classified by a particle size suitable for a powder bed of the laser PBF (impurities shown in Table 2 exclude O, H, S and N from the impurities). The melting temperature during the gas atomizing treatment was performed under a condition of 1,300°C.

As a result of measuring a particle diameter distribution of the C18000 powder for the metal AM of an example of the present invention using MT3300EXII manufactured by Microtrac Co., Ltd., and a particle size distribution, in which a 10% cumulative particle diameter based on a volume was 15 µm, a 50% cumulative particle diameter was 27 µm, a 90% cumulative particle diameter was 45 µm, was obtained.

As a result of measuring a particle diameter distribution of the C18150 powder for the metal AM of an example of the present invention using MT3300EXII manufactured by Microtrac Co., Ltd., and a particle size distribution, in which a 10% cumulative particle diameter based on a volume was 19 µm, a 50% cumulative particle diameter was 30 µm, a 90% cumulative particle diameter was 49 µm, was obtained.

A small piece of an additive manufacturing product was manufactured using the C18000 powder for the metal AM of the example of the present invention under a condition of an energy density of 13 J/mm² by using a commercially available laser PBF apparatus.

A small piece of an additive manufacturing product was manufactured using the C18150 powder for the metal AM of the example of the present invention under a condition of an energy density of 5 J/mm² by using a commercially available laser PBF apparatus.

### (Structure of surface of copper alloy powder for the metal AM)

A microstructure of a surface of the copper alloy powder C18000 for the metal AM the copper alloy powder C18150 for the metal AM of the example of the present invention was evaluated using Auger electron spectroscopy. Results of the Auger electron spectroscopy analysis of the surface of the particle constituting the copper alloy powder for the metal AM are shown in FIGS. 2A to 2E, FIGS. 3A to 3C, and FIGS. 4A and 4B.

### (Structure of cross section of copper alloy powder for the metal AM)

In the copper alloy powder C18000 for the metal AM and the copper alloy powder C18150 for the metal AM, each of the microstructures of the cross section of the particle of the example of the present invention was evaluated using the Auger electron spectroscopy analysis and the scanning electron microscope spectroscopy. Analysis Results of the cross section of the particle constituting the copper alloy powder for the metal AM are shown in FIGS. 5A and 5B, and FIGS. 6A to 6C.

### (Composition of ingot and copper alloy powder for the metal AM)

In the ingot shown in Table 1, and in the copper alloy powder for the metal AM of the example of the present invention shown in Table 2, the O concentration was obtained by an inert gas melting-infrared absorption method, the H concentration was obtained by an inert gas melting-heat conductivity method, and the S concentration was obtained by combustion-infrared absorption method. In addition, concentrations of components other than these substances excluding copper were obtained by combining fluorescent X-ray spectrometry, glow discharge mass spectrometry, and inductively coupled plasma mass spectrometry.

### (Density)

A density of the additive manufacturing product was evaluated from a cross section of the manufactured additive manufacturing product, and an area occupied by voids observed on the cross section of the additive manufacturing product. In the present specification, this density is defined as a density of the additive manufacturing product.

In the evaluation of the density of the additive manufacturing product, a cross-sectional area to be measured is defined in the cross section of the additive manufacturing product (this is referred to as an evaluation cross-sectional area which is 3.4mm square), portions of voids inside the measurement cross-sectional area were confirmed, and an occupied area of the voids in the evaluation cross-sectional area was calculated. (Evaluation cross-sectional area - void occupied area)/evaluation cross-sectional area was defined as the density of the additive manufacturing product. An evaluation result of the density of the additive manufacturing product is shown in Table 2.

### (Evaluation of mechanical characteristics and electrical conductivity of additive manufacturing product)

The manufactured additive manufacturing product was subjected to the heat treatment as described later, and a Vickers hardness and an electrical conductivity of the additive manufacturing product after the heat treatment were measured.

As the mechanical characteristics of the manufactured additive manufacturing product, a Vickers hardness (HV unit) at room temperature was measured based on JIS Z 2244: 2009. A load for measuring the Vickers hardness was set to 10 kgf. In addition, an electrical conductivity in a %IACS unit of the manufactured additive manufacturing product was measured at room temperature by overflow type electrical conductivity measurement. These characteristics of the additive manufacturing product is shown in Table 2.

### (Presence or absence of CrSi-based compound and NiSi-based compound on surface of copper alloy particle)

By the high-angle annular dark-field scanning transmission microscopy, the presence or absence of the CrSi-based compound and the NiSi-based compound on the particle surface of the copper alloy constituting the powder was confirmed in the copper alloy powder for the metal AM of the example of the present invention. Analysis results were obtained as shown in FIGS. 11 and 12.

### (Presence or absence of Cr-containing compound and Zr-containing compound on surface of copper alloy particle)

By the high-angle annular dark-field scanning transmission microscopy and the transmission electron microscopy, the presence or absence of the Cr-containing compound and the Zr-containing compound on the particle surface of the copper alloy constituting the powder was confirmed in the copper alloy powder for the metal AM of the example of the present invention. Analysis results were obtained as shown in FIGS. 13 to 15.

**[Table 1]**

| | Component composition (mass ratio) | | | | | | | | |
|---|---|---|---|---|---|---|---|---|---|
| | Cu | Cr (%) | Ni (%) | Si (%) | Zr (%) | O (ppm) | H (ppm) | S (ppm) | Impurities (%) |
| C18000 ingot | Balance | 0.40 | 2.60 | 0.50 | <0.001 | <10 | <5 | <10 | <0.02 |
| C18150 ingot | Balance | 0.84 | <0.001 | <0.002 | 0.05 | <10 | <5 | <10 | <0.04 |

**[Table 2]**

| | Component composition (mass ratio) | | | | | | | | | Additive manufacturing product | | |
|---|---|---|---|---|---|---|---|---|---|---|---|---|
| | Cu | Cr (%) | Ni (%) | Si (%) | Zr (%) | O (ppm) | H (ppm) | S (ppm) | Impurities (%) | Density (%) | Vickers hardness (HV) | Electrical conductivity (%IACS) |
| C18000 powder | Balance | 0.40 | 2.60 | 0.50 | <0.001 | 100 | <10 | <10 | <0.02 | 99.3 | 194 | 40 |
| C18150 powder | Balance | 0.81 | 0.0035 | <0.002 | 0.06 | 120 | <10 | <10 | <0.04 | 99.6 | 130 | 90 |

FIGS. 2A to 2E and FIGS. 3A to 3C show the results of the Auger electron spectroscopy after performing ion etching on the particle surface of the copper alloy powder (FIGS. 2A to 2E shows C18000 powder and FIGS. 3A to 3C shows C18150 powder) for the metal AM of the present invention. Although an etching rate of each constituent element alone or compound generated by each constituent element on the particle surface of the copper alloy powder of the present invention in an experimental system of the present Auger electron spectroscopy is not clear, since an etching rate of SiO₂ in the experimental system of the present Auger electron spectroscopy is 1.08 nm/min, it is considered that the ion etching for 15 minutes is a structure after performing etching a thickness of approximately 15 nm. As shown in FIG. 2A and FIG. 3A, on the particle surface after ion etching, a large number of island-shaped microstructures were generated.

In addition, in a comparison between FIGS. 2A, 2B, and 2E, and between FIG. 3A and FIG. 3B, it was confirmed that the island-shaped microstructures was derived from a Cr-based precipitate.

FIGS. 16A to 16F are analysis results obtained by Auger electron spectroscopy of the particle surface of the copper alloy particle constituting the copper alloy powder (C18000) for the metal AM of the present invention, and are Cr mapping images of the particle surface before ion etching, after performing ion etching for 5 minutes, 15 minutes, 30 minutes, and 50 minutes. First, as shown in FIGS. 16A and 16B, it is found that, on the particle outermost surface before ion etching, the Cr-based precipitate is distributed on the copper crystal grain boundary and on the copper crystal grain (copper crystal grain surface) in an island shape. It is considered that the distribution of Cr confirmed in FIGS. 16A and 16B is derived from the Cr-containing compound.

As shown in FIGS. 16B to 16F, a structural change of the island-shaped microstructure on the particle surface was confirmed with the time of ion etching. As shown in FIG. 16F, the distribution of the Cr-based precipitate is confirmed even after the ion etching for 50 minutes, however, compared to FIGS. 16C and 16D, it is confirmed that the number of portions of distribution of Cr tends to decrease. In addition, it is considered that the thickness of the Cr-containing compound 52 in the copper alloy powder (C18000) for the metal AM of the present invention is in a range of approximately 1 nm to 100 nm from the etching rate of SiO₂ in an experimental system of the present Auger electron spectroscopy analysis and the state of the structural change of the particle surface with the etching time of FIGS. 16B to 16F.

Further, FIG. 3C shows results of the Auger electron spectroscopy of a surface of a single copper crystal particle after performing ion etching for 30 minutes on the vicinity of the outermost surface of the particle of the copper alloy powder (C18150) for the metal AM of the present invention. From the above etching rate of SiO₂, it is considered that the ion etching for 30 minutes is a structure after performing etching a thickness of approximately 30 nm. As shown in FIG. 3C, after performing ion etching for 30 minutes, it was confirmed that Cr and Zr, other than Cu, were also present on the copper crystal particle on the particle surface of the copper alloy powder for the metal AM of the present invention, whereas the island-shaped structure was hard to be seen.

Therefore, in the copper alloy powder (C18150) for the metal AM of the present invention, it is considered that a thickness of a surface layer containing the Cr-based precipitate present on the particle surface, that is, the Cr compound layer 52 including the Cr-containing compound, is in a range of approximately 1 nm to 100 nm.

Considering the above results of FIGS. 16A to 16F and FIGS. 3A to 3C, the thickness of the surface layer containing the Cr-based precipitate on the particle surface of the copper alloy powder for the metal AM of the present invention, that is, the Cr compound layer 52 including the Cr-containing compound, is generally in the range of 1 nm to 100 nm.

FIGS. 4A and 4B shows an intensity depth profiles of O obtained by Auger electron spectroscopy of the surface of the particle constituting the copper alloy powder for the metal AM of the present invention (FIG. 4A shows C18000 powder and FIG. 4B shows C18150 powder).

In the copper alloy powder for the metal AM of the present invention, it was confirmed that an oxygen concentration decreased from the outermost surface of the copper alloy particle toward the inside of the copper alloy particle. Essentially, since the copper alloy powder for the metal AM of the present invention contains oxygen as the copper alloy, a certain amount of oxygen is present in the particle main body, and it is considered that this constitutes a background concentration of the oxygen concentration in the particle main body. On the other hand, the gradient of the oxygen concentration observed on the particle surface is generated mainly in the step of powdering, and furthermore, is considered to be present in a range of approximately 1 nm to 100 nm from the results in FIGS. 4A and 4B, and it is considered that the gradient of the oxygen concentration can be generated in the order of the thickness of the surface layer containing the Cr-based precipitate.

From the results shown in FIGS. 2A to 2E, FIGS. 3A to 3C, and FIGS. 4A and 4B, it was confirmed that the Cr compound layer 52 including the Cr-containing compound derived from the Cr-based precipitate was formed on the copper crystal grain boundary and the copper crystal grain on the particle surface of the copper alloy powder for the metal AM of the present invention (on a surface of the copper crystal grain), and this Cr compound layer 52 was a layer containing Zr and oxygen.

It is considered that the presence of such a layer containing oxygen in the copper alloy powder for the metal AM of the example of the present invention has an effect of suppressing alteration of the surface of the copper alloy powder.

In addition, as shown in FIGS. 2A to 2E, FIGS. 3A to 3C, and FIGS. 4A and 4B, since Cu, which is a parent phase, is a main component in the copper alloy powder for the metal AM of the example of the present invention, it is presumed that such oxygen is mainly derived from copper oxide, and it is presumed that it is present as a constituent element of oxide of the alloy element and other impurity element. That is, it is presumed that the Cr compound layer on the surface of the copper alloy powder for the metal AM of the example of present invention forms a composite layer configured from Cu or copper oxide, oxide of the alloy element containing Cr, or the like, while including a compound configured with Cr.

Regarding the density of precipitates derived from the Cr-containing compound in the Cr compound layer 52 of the particle of the copper alloy powder (C18000 powder and C18150 powder) for the metal AM of the example of the present invention, an area occupancy rate of the Cr-containing compound (the Cr-based precipitate) was calculated from a size and a number of precipitates of the Cr-containing compound per 1 µm² using an image obtained by analyzing the outermost surface of the Cr compound layer 52 by Auger electron spectroscopy using a scanning Auger electron spectroscopy analysis apparatus PHI700xi manufactured by ULVAC-PHI, INCORPORATED.

On the outermost surface of the Cr compound layer 52 of the particle of the copper alloy powder (C18000 powder) for the metal AM of the example of the present invention, a portion where the density of the precipitate is the area ratio of 17%, and a portion where the density of the precipitate is the area ratio of 21% were observed (see FIGS. 2A and 2B). On the outermost surface of the Cr compound layer 52 of the particle of the copper alloy powder (C18100 powder) for the metal AM of the example of the present invention, a portion where the density of the precipitate is the area ratio of 16%, and a portion where the density of the precipitate is the area ratio of 28% were observed.

The copper crystal grain boundary of the image obtained by analyzing the Cr compound layer 52 of the particle of the copper alloy powder (C18000 powder and C18150 powder) for the metal AM of the example of the present invention by Auger electron spectroscopy using a scanning Auger electron spectroscopy analysis apparatus PH1700xi manufactured by ULVAC-PHI, INCORPORATED, was observed, and the line density per grain boundary length of 1 µm was obtained from a proportion of the precipitate derived from the Cr-containing compound occupying the grain boundary length of 1 µm. In the Cr compound layer 52 of the copper alloy powder (C18000 powder) for the metal AM, a portion where the line density of the precipitate on the copper crystal grain boundary was 31% and a powder where the line density was 60% were observed. In the Cr compound layer 52 of the copper alloy powder (C18150 powder) for the metal AM, a portion where the line density of the precipitate on the copper crystal grain boundary was 59% and a powder where the line density was 74% were observed.

As shown in FIGS. 5A and 5B, and FIGS. 6A to 6C, in the cross-sectional observation of the copper alloy particle, the precipitation of the Cr-containing compound was commonly confirmed on the copper crystal grain boundary in the particle constituting the copper alloy powder for the metal AM of the example of the present invention (FIG. 4A and FIG. 5B shows C18000 powder and FIGS. 6A to 6C shows C18150 powder). In addition, compared to the particle surface, the precipitation of the Cr-containing compound was not observed in the particle at the same frequency as that it is not observed on the grain boundary. That is, the results indicate that the Cr-containing compound is frequently observed on the particle surface. The reason for this is predicted to be that there are almost no Cr-based precipitate in the copper crystal grain, or the Cr-based precipitate in the copper crystal grain is very small in size (or small in amount), which is difficult to be observed. Furthermore, from the comparison between FIGS. 2B to 2E and FIGS. 5A to 5B, that is, from the comparison between the particle surface and the particle cross section, it was considered that a proportion of the precipitate occupying a certain surface of the particle is greater on the particle outermost surface (or the surface layer) than inside of the particle.

As representatively shown in FIGS. 5A to 5B, the presence of any one or both of the CrSi-based precipitate and the NiSi-based precipitate were confirmed on the grain boundary in the particle of the copper alloy powder for the metal AM. This result indicates that any one or both of the CrSi-based precipitate and the NiSi-based precipitate are present on the grain boundary in the CrNiSi-containing layer on the particle surface of the particle of the copper alloy powder for the metal AM.

On the other hand, as representatively shown in FIGS. 6A to 6B, the presence of the Cr-based precipitate was confirmed on the grain boundary in the particle of the copper alloy powder for the metal AM. This result indicates that the Cr-based precipitate is present on the grain boundary in the Cr compound layer on the particle surface of the particle of the copper alloy powder for the metal AM.

This result indicates that the Cr-based precipitate is present on the grain boundary from a surface to an inside of the particle, in an internal portion than the Cr-containing layer on the particle surface of the particle of the copper alloy powder for the metal AM.

As shown in FIG. 11, from the analysis results of the surface of the copper alloy particle of the copper alloy powder for the metal AM of the present invention with highangle annular dark-field scanning transmission microscopy, it was confirmed that the CrSi-based compound formed on the surface of the copper alloy particle of the copper alloy powder for the metal AM of the present invention contains Cr₃Si. In addition, as shown in FIG. 12, from analysis of an electron diffraction pattern, it was confirmed that, in a case of FIG. 10, Cr₃Si was formed in a lattice-matched manner to a Cu crystal.

As shown in FIGS. 13 and 14, from the analysis results of the surface of the copper alloy particle of the copper alloy powder for the metal AM of the present invention with a transmission electron microscope, it was confirmed that the Cr-based compound formed on the surface of the copper alloy particle of the copper alloy powder for the metal AM of the present invention contains Cr and Cr₂Zr(Hexagonal)[-21-4]).

As shown in FIG. 15, from the analysis results of the surface of the copper alloy particle of the copper alloy powder for the metal AM of the present invention with a transmission electron microscope, it was confirmed that the Zr-based compound formed on the surface of the copper alloy particle of the copper alloy powder for the metal AM of the present invention contains Cu₈Zr₃(Orthorhombic)[-21-4]).

As shown in Table 2, in a case where the additive manufacturing process is performed using the copper alloy powder for the metal AM of the example of the present invention which has C18000 composition, and in which the Cr compound layer including the Cr-containing compound is formed on the surface of the copper alloy particle constituting the copper alloy powder, the density of the additive manufacturing product was set to 99.3%. This result indicates that, in the copper alloy powder for the metal AM of the example of the present invention, the laser absorption is promoted, thereby, an increase of the density of the formed body is realized.

The additive manufacturing product having C18000 composition was subjected to a first heat treatment at a temperature of 950°C for 15 minutes and a second heat treatment at a temperature of 420°C for 2.2 hours to obtain a heated additive manufacturing product. The heated additive manufacturing product had 194HV of the Vickers hardness and 40% IACS of the electrical conductivity, in the room temperature (see Table 2).

As shown in Table 2, in a case where the additive manufacturing process is performed using the copper alloy powder for the metal AM of the example of the present invention which has C18150 composition, and in which the Cr compound layer including the Cr-containing compound is formed on the surface of the copper alloy particle constituting the copper alloy powder, the density of the additive manufacturing product was set to 99.6%. This result indicates that, in the copper alloy powder for the metal AM of the example of the present invention, the laser absorption is promoted, thereby, an increase of the density of the formed body is realized.

The additive manufacturing product having C18150 composition was subjected to a first heat treatment at a temperature of 980°C for 15 minutes and a second heat treatment at a temperature of 450°C for 1.0 hours to obtain a heated additive manufacturing product. The heated additive manufacturing product had 130HV of the Vickers hardness and 90% IACS of the electrical conductivity, in the room temperature (see Table 2).

From these results, it was confirmed that, in the copper alloy powder for the metal AM of the example of the present invention, it is possible to manufacture an additive manufacturing product with less voids, which is important for actual use, and it is possible to realize a practical additive manufacturing product of a copper alloy in which mechanical characteristics and electrical conductivity are confirmed to be sufficient for actual use.

### [Reference Signs List]

50: Copper alloy particle constituting copper alloy powder for the metal AM
51: Particle main body
52: Cr compound layer

## Claims

1. A copper alloy powder for a metal AM, which is used for the metal AM, the copper alloy powder comprising:
a copper alloy containing Cr,
wherein a Cr compound layer including a Cr-containing compound is formed on a surface of a copper alloy particle constituting the copper alloy powder.

2. The copper alloy powder for the metal AM according to Claim 1,
wherein the Cr compound layer formed on the surface of the copper alloy particle contains oxygen.

3. The copper alloy powder for the metal AM according to Claim 1,
wherein, in a cross-sectional observation of the copper alloy particle constituting the copper alloy powder, the Cr-containing compound is distributed on a crystal grain boundary in a whole of the copper alloy particle.

4. The copper alloy powder for the metal AM according to Claim 1,
wherein a 50% cumulative particle diameter D50 based on a volume, which is measured by a laser diffraction and scattering method, is set to be in a range of 5 µm or more and 120 µm or less.

5. The copper alloy powder for the metal AM according to Claim 1,
wherein a 10% cumulative particle diameter D10 based on a volume, which is measured by a laser diffraction and scattering method, is set to be in a range of 1 µm or more and 80 µm or less.

6. The copper alloy powder for the metal AM according to Claim 1,
wherein a 90% cumulative particle diameter D90 based on a volume, which is measured by a laser diffraction and scattering method, is set to be in a range of 10 µm or more and 150 µm or less.

7. A method for manufacturing an additive manufacturing product, the method comprising:
a preparation step of preparing the copper alloy powder for the metal AM according to any one of Claims 1 to 6; and
a forming step of sequentially repeating a first step of forming a powder bed including the copper alloy powder for the metal AM, and a second step of forming a solidified bed by solidifying the copper alloy powder for the metal AM at a predetermined position in the powder bed to manufacture an additive manufacturing product.

8. The method for manufacturing an additive manufacturing product according to Claim 7, further comprising:
a heat treatment step of performing a heat treatment in a temperature range of 300°C or higher and a melting point of pure copper or lower after the forming step.
